# FASCICULE DE BREVET EUROPEEN

(11) **EP 2 123 147 B1**
(45) Date de publication et mention de la délivrance du brevet: **29.12.2010**
(21) Numéro de dépôt: 09160898.4
(22) Date de dépôt: 22.05.2009
(51) Int. Cl.: A01G 9/14, E04H 15/64

(54) **Dispositif de fixation de matériau souple de couverture de serre**
Befestigungsvorrichtung für flexibles Material zum Abdecken von Gewächshäusern
Device for fixing flexible material covering a greenhouse

(30) Priorité: 23.05.2008 FR 0853371
(43) Date de publication de la demande: 25.11.2009
(73) Titulaire: Filclair S.A., 13770 Venelles (FR)
(72) Inventeur: Thery, Arnauld, 13770 Venelles (FR)
(74) Mandataire: Domange, Maxime

(56) Documents cités:
- EP-A- 1 880 595
- DE-A1- 4 000 874
- FR-A- 2 575 243
- US-A- 4 769 877

## Description

La présente invention concerne donc un dispositif de fixation de matériau souple de couverture tel qu'un film plastique, une bâche ou un filet, dénommé clip.

Plus particulièrement, la présente invention concerne les serres, de préférence de type "multi-chapelles", constituées d'une pluralité de nefs, recouvertes chacune d'un film plastique, voire d'une double paroi gonflable comportant deux films transparents superposés, fixés au niveau des chéneaux de ladite nef, formant ainsi une pluralité d'enveloppes dans lesquelles on injecte de l'air, afin d'augmenter l'isolation thermique de la serre. Cette couche d'air apportée par l'enveloppe gonflée d'air permet de diminuer le coefficient de déperdition thermique au niveau de ladite couverture.

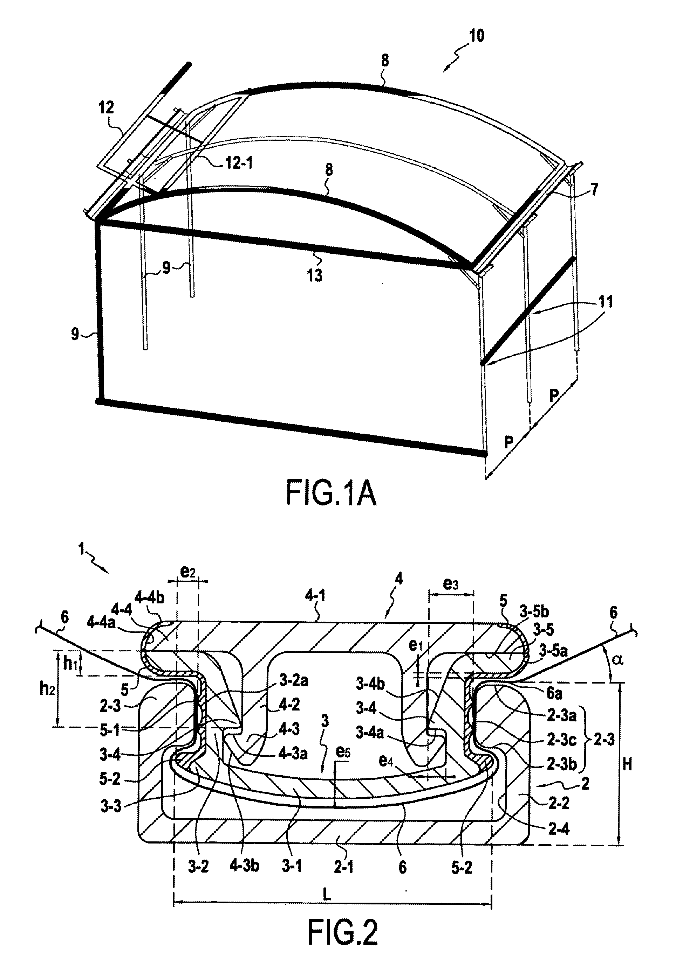

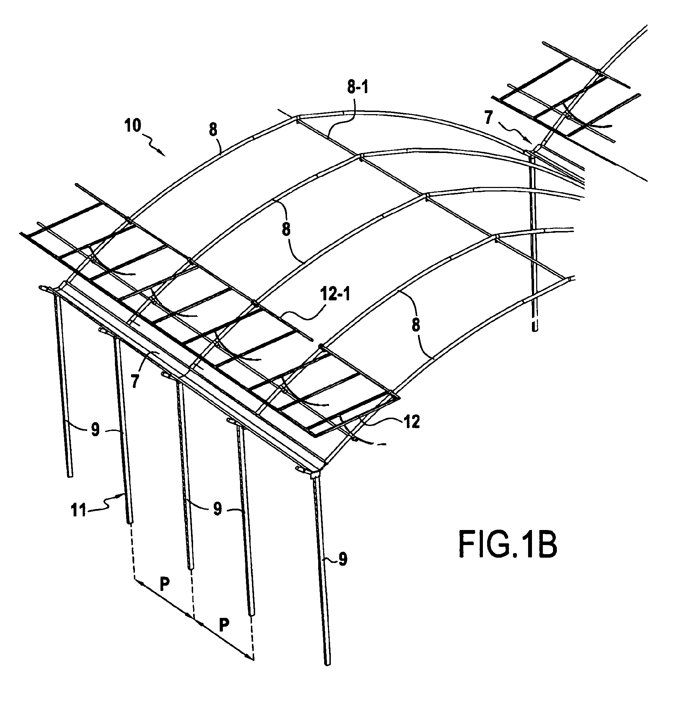

Un exemple d'une telle serre est représenté figure 1. Ces serres comportent une pluralité de fermes parallèles constituées chacune d'un cintre supérieur constitué par un ou plusieurs profilés métalliques formant un arc, brisé ou non, et reposant sur les extrémités supérieures de deux poteaux latéraux verticaux, eux-mêmes reliés entre eux par une traverse de rigidification de l'ensemble. D'autres types de serres "multi-chapelles" comprennent des nefs en toiture en pentes plates à double versants.

Les fermes sont reliées entre elles par au moins une entretoise longitudinale disposée sous leur cintre et par des chéneaux latéraux reliant les poteaux latéraux des fermes consécutives, lesdites fermes étant recouvertes d'une enveloppe constituée de un ou deux matériau(x) souple(s) de couverture tendus transversalement sur les cintres entres les chéneaux pour former une nef.

Un autre exemple de nefs est constitué d'arceaux ancrés des deux cotés au sol, la nef étant alors appelée quelquefois "tunnel".

Lorsque la serre ne comporte qu'une seule nef, on parle alors de serre "tunnel" ou "mono-chapelle" et de serre "multi-tunnels" ou "multi-chapelles" lorsque la serre comporte plusieurs nefs disposées parallèlement les unes aux autres dans leur sens longitudinal. Des serres de ce type ont été décrites notamment dans le brevet FR 8915009.

De façon connue, les nefs de faible longueur, notamment de longueur inférieure à 100 m, de préférence inférieure à 50 m, peuvent être couvertes sur leur toiture d'une seule enveloppe s'étendant sur toute la longueur de la nef. Mais, pour les nefs de plus grande longueur, notamment de longueur de 100 à 250 m, on installe avantageusement plusieurs enveloppes mises bout à bout dans la longueur, reliées pneumatiquement une à une en série. En pratique, une nef pourra nécessiter la mise bout à bout de deux ou trois enveloppes pour couvrir toute la longueur de sa toiture.

D'autre part, les pignons et les rives de la serre peuvent également être recouverts d'enveloppes sous forme de film ou bâche plastique.

Plus particulièrement, la présente invention concerne un dispositif de fixation de bâches ou le film plastique de couverture de serre, aussi dénommé clip comprenant au moins deux profilés dont :
- un premier profilé rigide constituant une semelle ou sabot, fixé sur la structure de la serre, de préférence le long de chenaux et/ou de cintres ou arceaux transversaux, et
- un deuxième profilé apte à se déformer et ou à être déformé pour s'emboîter dans ou par dessus ledit premier profilé de manière à fixer un dit film de couverture par pincement, ledit film étant intercalé entre lesdits de premier et deuxième profilés,

Ce type de profilé semelle s'adapte sur les deux cotés longitudinaux d'une nef de serre multi-chapelle (environ 100 m de longueur) au niveau des chéneaux, ainsi qu'aux extrémités de la nef, le long des arceaux transversaux. Le film se pose longitudinalement le long de la nef, sur toute la largeur de celle-ci.

Dans les systèmes de clips réalisés exclusivement en aluminium, le clip comprend en général uniquement deux profilés. Ces profilés se cintrent selon la courbure des arceaux lorsqu'ils sont fixés aux arceaux.

Dans la catégorie des profilés incluant des profilés en matière plastique, les systèmes les plus usuels comportent trois profilés dont une semelle en aluminium/acier et la combinaison de 2 profilés en matière plastique.

Dans les solutions les plus répandues actuellement, les profilés en matière plastique sont réalisés en PVC. Des profilés de ce type sont décrits dans FR 2 575 243 et EP 1 880 595 au nom de la demanderesse.

Un problème majeur avec les clips du type décrit ci-dessus tient à la fragilité du ou des films à proximité de leur amarrage au niveau du dispositif de fixation, c'est-à-dire au niveau de la jonction entre les deux profilés. En effet, lorsque on emboîte l'un des profilés dans ou sur l'autre, cela provoque un effort de compression important du film qui peut être amené à un état de ruine par coupure ou déchirure lors de ladite fixation. Celle-ci peut en effet, donner lieu à des efforts de frappe important dus par exemple à l'emboîtage de profilé à l'aide d'un marteau.

D'autre part, on observe des amorces de coupure ou déchirure non seulement lors de la mise en place du clip sur ledit film, mais, également, lorsqu'il se produit en cours de vie de la serre, des battements du film contre le profilé supérieur du clip, ces battements générant aussi des coupures ou déchirures, ce qui induit :
- des fuites d'air et/ou d'eau entre les parois avec, dans ce dernier cas, apparition de poches d'eau, et
- des risques de débâchage par arrachement du film sous l'effet du vent.

Enfin, dans les dispositifs de fixation comprenant des profilés de matière plastique, on observe des problèmes de maintient du film dans la durée, à savoir un phénomène de glissement du film qui tente à le déclipser.

En conséquence, non seulement les clips engendrent lors de leur pose des dégradations du film, mais en outre, ils assurent un maintien et une protection du film insuffisants en cours de mise en oeuvre de la serre.

D'autre part, dans les conditions de mise en oeuvre en altitude, compte tenu du fait que les films plastiques de couverture de serre sont de relativement faible épaisseur (de 150 à 600 µm), on constate aussi les problèmes suivants. Tout d'abord, le PVC présente un point VICA (point de ramollissement) d'environ 80°C, c'est-à-dire qu'il commence à se ramollir au dessus de 80°C.

Or, en altitude, les chéneaux sur lesquels sont fixés les profilés de semelle montent en température de par leur grande surface en aluminium ou acier et par leur état de surface. Il en résulte une transmission de chaleur aux autres profilés en PVC, qui peuvent monter à des températures supérieures à 100°C.

Le but de la présente invention est de fournir un nouveau dispositif de fixation de matériaux souples de couverture de serre du type décrit ci-dessus présentant des propriétés améliorées et plus particulièrement qui assure des fonction de maintien du film et de protection du film aussi bien lors de sa pose ou fixation à l'aide dudit dispositif que en cours d'usage de la serre.

Pour ce faire, la présente invention fournit un dispositif de fixation de matériaux souples de couverture de serre, comprenant au moins deux profilés dont :
- un premier profilé ouvert (2) rigide formant une rainure constituant une semelle ou sabot, fixé sur la structure de la serre, de préférence le long de chenaux (7) et/ou de cintres ou arceaux transversaux (8), et
- un deuxième profilé ouvert (3) de type oméga apte à se déformer et ou à être déformé pour s'emboîter dans ou par dessus ledit premier profilé (1) de manière à fixer un dit film de couverture (6) par pincement, ledit film étant intercalé entre lesdits de premier et deuxième profilés,

**Caractérisé en ce qu**'au moins les parties d'au moins l'un desdits premier et deuxième profilés, de préférence au moins les parties dudit deuxième profilé, venant en appui contre l'autre profilé pour réaliser ladite fixation dudit film coincé entre lesdites parties desdits premier et deuxième profilés, sont recouvertes d'une couche de protection (5) constituée d'un matériau présentant des propriétés de dureté réduite par rapport au matériau de base dudit profilé sur lequel elle est appliquée, de préférence ladite couche de protection étant réalisée en un matériau d'une dureté inférieure à 70 Shore A.

On entend ici par « recouverte d'une couche de protection » que ladite couche de protection est entièrement solidaire dudit profilé et vient de matière avec celui-ci au niveau de la zone ou partie du profilé sur lequel elle est appliquée, notamment par co-extrusion avec ledit profilé.

On comprend donc, le cas échéant, que ledit film de couverture est intercalé entre ladite couche de protection et l'autre profilé que celui sur laquelle ladite couche de protection est appliquée.

Ce revêtement relativement plus souple a une fonction de protection. En effet, ladite couche tolère une certaine déformation, de par sa souplesse relative, lors de la pose du film, notamment en cas de contact trop dur, à savoir en cas d'effort de compression du type poinçonnage supporté par le film, lors de l'emboîtage dudit profilé supérieur, notamment l'emboîtage dudit deuxième profilé sur ou dans ledit premier profilé, sous l'effet d'une frappe réalisée par l'outil d'emboîtage tel qu'un marteau. Ainsi, la présente invention permet d'éviter ou réduire les risques de déchirure ou coupure du film lors de sa fixation.

La présente invention consiste donc à protéger le film des efforts de poinçonnage ponctuels mis en oeuvre lors de la pose, en dotant le profilé supérieur, notamment le deuxième profilé, d'une couche d'absorption jouant le rôle d'amortisseur capable de répartir l'énergie de frappe de l'outil de pose tel qu'un marteau utilisé pour le dit emboîtage.

Le système de fixation selon la présente invention remplit donc non seulement la fonction de maintien et de fixation du film, mais, également, une fonction additionnelle de protection du film au niveau de sa fixation ou à proximité de celle-ci.

Plus particulièrement, ledit premier profilé comprend un premier élément de blocage (2-3) par accrochage et/ou butée et ledit deuxième profilé comprend un deuxième élément de blocage (3-3) par accrochage et/ou butée, complémentaire dudit premier élément de blocage, apte à se déformer et ou à être déformé pour venir coopérer en fixation par appui contre ledit premier élément de blocage. Et, c'est au moins la zone de la face dudit deuxième élément de blocage en butée ou retenue contre ledit premier élément de blocage, qui est recouverte de ladite couche de protection, ledit film étant intercalé entre lesdits premier et deuxième élément de blocage.

Un dispositif selon l'invention est **caractérisé en ce que** les parties des faces supérieures et latérales externes dudit dispositif, de préférence les tranches latérales externes du deuxième profilé au dessus dudit premier profilé, à proximité de la zone d'amarrage dudit film sur ledit dispositif, sont revêtues d'une dite couche de protection.

On entend ici par « face externe du dispositif ou profilé » la face exposée vers l'extérieur du dispositif.

Il s'agit donc des zones du deuxième profilé à proximité du point de fixation du film, contre lesquelles la couverture de la serre peut battre, notamment en cas de vent. Cette caractéristique est particulièrement avantageuse car elle permet de résoudre un autre problème à l'origine de la dégradation des films de couverture de serre, à savoir ceux liés aux battements du film contre le profilé supérieur, lesquels génèrent également des déchirures.

La présente invention fournit donc un dispositif remplissant une fonction de maintien améliorée, c'est-à-dire assurant une protection du film non seulement lors de la fixation proprement dite du film dans ledit dispositif de fixation, mais, également, en cours d'utilisation.

La présente invention permet donc de le résoudre les problèmes de fragilité du film lors de sa fixation sur la structure de la serre, mais, également, lors de son usage, sans avoir à modifier les différents autres composants de la serre, à savoir en modifiant seulement le dispositif de fixation de la couverture. Or, dans le coût de revient global de la serre, le clip de fixation représente environ seulement 1 % du coût total de la serre.

De préférence encore, un dispositif selon l'invention est **caractérisé en ce que** ladite couche de protection est en matière antidérapante.

On entend ici par « antidérapant », des propriétés de frottement qui évite le glissement du film plastique contre ladite couche de protection.

Cette caractéristique du matériau constitutif de ladite couche de protection améliore donc la fonction première de maintien du dispositif selon invention.

Particulièrement, le dispositif selon l'invention est **caractérisé en ce que** lesdits premier et deuxième profilés sont en métal, de préférence en aluminium, ou en matière plastique, de préférence en matière thermoplastique polyoléfinique, et ladite couche de protection est en matière à caractère caoutchoutique.

Selon d'autres caractéristiques avantageuses du dispositif de la présente invention :
- la couche de protection présente sur sa face de contact avec le dit film, au moins une zone comprenant des petites surépaisseurs formant bosses et creux s'étendant longitudinalement, de préférence dans une zone plate de ladite partie du profilé sur laquelle ladite couche est appliquée et ladite surépaisseur représente de préférence encore une augmentation d'épaisseur de la couche de protection de 25 à 150 %.

Ces petites surépaisseurs forment des vagues dans ladite couche de protection et lui confèrent des propriétés d'absorption différenciée, et lui permettent ainsi de tolérer des variations d'épaisseur de la couverture, notamment en cas de double paroi, et facilitent ainsi la fixation de la couverture à l'aide du dispositif selon invention.

Plus particulièrement, ledit premier profilé comprend un premier élément de blocage par accrochage et/ou butée et ledit deuxième profilé comprend un deuxième élément de blocage par accrochage et/ou butée, complémentaire dudit premier élément de blocage, apte à se déformer et/ou à être déformé pour venir coopérer en fixation par appui contre ledit premier élément de blocage, et ladite couche de protection présente une grande surépaisseur au niveau de la zone de la (ou des) face(s) d'au moins l'un desdits premier et/ou second éléments de blocage, ladite grande surépaisseur représentant une épaisseur pouvant représenter jusqu'à 150 % de l'épaisseur de la partie du profilé sur laquelle elle est appliquée.

Ces dites grandes surépaisseurs permettent de faciliter l'emboîtage desdits premier et deuxième profilés tout en conservant un bon maintien du film et une bonne étanchéité de sa fixation.
- le dispositif selon l'invention est **caractérisé en ce que** ladite couche de protection présente dans sa partie courante, une épaisseur d'environ 5 à 30%, de préférence au moins 15%, de l'épaisseur de la partie du profilé sur laquelle elle est appliquée.

On entend ici par « partie courante de la couche », les zones de la couche en dehors des zones dites de surépaisseur.

En pratique ladite de couche de protection présente une épaisseur de 0,1 à 0,5 mm avec des petites surépaisseurs localisées jusqu'à environ 1 mm, pour des profilés dont les parties en cause ont une épaisseur de 1 à 3 mm.

En revanche lesdites grandes surépaisseurs peuvent atteindre 100% de l'épaisseur de la partie du profilé sur laquelle elles sont appliquées comme mentionné ci-dessus.

Dans un mode préféré de réalisation le dispositif selon l'invention est **caractérisé en ce que** ledit deuxième profilé est un profilé extrudé réalisée en polypropylène présentant un point VICA supérieur à 100°C, de préférence supérieur à 110°C, et ladite couche de protection est réalisée en matière élastomère thermoplastique (TPE) constituée d'une résine thermoplastique et au moins un caoutchouc dispersé dans la phase thermoplastique, de préférence du type matière thermoplastique vulcanisée (TPV) dans laquelle le caoutchouc est un caoutchouc diénique vulcanisé, notamment vulcanisé dynamiquement.

On peut citer comme matière thermoplastique vulcanisée dynamiquement les mélanges de Polypropylène et d'Ethylène-Propylène-Diène monomère (EPDM).

La mise en oeuvre d'un matériau polypropylène confère une meilleure résistance au froid et une meilleure tenue à la chaleur que le PVC. La meilleure résistance au froid et la plus grande souplesse limitent le risque de cassure lors de la manipulation.

En matière de produits thermoplastiques il est conventionnel de les caractériser par leur dureté, cette dernière étant en relation directe avec le module élastique et la souplesse du matériau. Actuellement, deux méthodes sont connues pour pratiquer la mesure de la dureté d'un matériau. Ces deux méthodes ont en commun de contrôler l'enfoncement d'un poinçon à la surface d'un échantillon à contrôler. La première méthode donne des valeurs de dureté traduites en Shore A et elle est utilisée essentiellement pour les matériaux souples, tandis que la seconde méthode donne des valeurs de dureté traduites en Shore D et est utilisée pour des matériaux plus durs.

Plus particulièrement, le dispositif selon l'invention est **caractérisé en ce que** ledit deuxième profilé est réalisé en polypropylène de dureté Shore de 30 à 60 Shore D, et ladite couche de protection est réalisée en élastomère thermoplastique présentant une dureté Shore de 50 à 70 Shore A, de préférence inférieure à 60 Shore A, de préférence de type Vegaprène^{®}.

Plus particulièrement encore, dans le dispositif selon l'invention :
- ledit premier profilé présente des premières parties latérales dénommées premières branches, en élévation verticale par rapport à un fond plat les reliant, lesdites premières branches formant sur leurs faces internes des premiers éléments de blocage par accrochage et/ou butée, et
- ledit deuxième profilé présente une section transversale en oméga, avec des deuxièmes parties latérales dénommées deuxièmes branches, en élévation verticale par rapport à un fond les reliant, de préférence un fond incurvé, lesdites deuxièmes branches formant sur leurs faces externes des deuxièmes éléments de blocage par accrochage et/ou butée, complémentaires desdits premiers éléments de blocage, aptes à se déformer et ou à être déformés pour venir coopérer en fixation par appui contre lesdits premiers éléments de blocage, sous l'action d'un moyen d'écartement desdites deuxièmes branches après emboîtage dudit deuxième profilé dans ledit premier profilé entre lesdites premières branches, et
- lesdites deuxièmes branches du deuxième profilé sont revêtues sur leurs faces externes latérales, au moins au niveau desdits deuxièmes éléments de blocage, d'une dite couche de protection.

On entend ici par « face interne » desdites première et deuxième branches, les faces desdites branches tournées vers l'espace entre lesdites branches et inversement pour les « face externe ».

Plus particulièrement et avantageusement, le dispositif selon l'invention est **caractérisé en ce que** ledit moyen d'écartement est un troisième profilé dénommé profilé clé, venant s'emboîter en force entre lesdites deuxièmes branches dudit deuxième profilé.

On comprend que ledit troisième profilé introduit en force entre lesdites deuxièmes branches, les écarte et bloque ainsi ledit deuxième élément de blocage contre ledit premier élément de blocage complémentaire.

Plus particulièrement encore, le dispositif selon l'invention présente les caractéristiques suivantes :
- ledit troisième profilé présente une partie supérieure formant couvercle, en sous face de laquelle s'étendent des troisièmes parties latérales inférieures sensiblement verticales constituant des jambages formant sur leurs faces externes des troisièmes éléments de blocage par accrochage et/ou butée, et
- lesdites deuxièmes branches dudit deuxième profilé forment sur leurs faces internes des quatrièmes éléments de blocage par accrochage et/ou en butée complémentaires desdits troisièmes éléments de blocage, aptes à coopérer en fixation par accrochage et/ou butée avec lesdits troisièmes éléments de blocage, lorsque ledit troisième profilé est emboîté en force dans ledit deuxième profilé, provoquant ainsi le blocage desdits premiers et deuxièmes éléments de blocage desdits premier et deuxième profilés, et

- la partie supérieure ou couvercle dudit troisième profilé comprend des parties latérales sensiblement horizontales dont la sous face vient en appui sur les faces supérieures formant méplats desdites deuxièmes branches après emboîtement dudit troisième profilé contre et dans ledit deuxième profilé, et
- au moins les faces externes latérales correspondant à la tranche dudit couvercle du troisième profilé, et de préférence les bords supérieurs dudit couvercle, ainsi que les faces externes latérales correspondant à la tranche desdits méplats desdites deuxièmes branches et de préférence les bords inférieurs en sous face desdits méplats desdites deuxièmes branches, sont recouverts d'une dite couche de protection.

On entend ici par « face interne desdites troisièmes branches » les faces desdites troisièmes branches tournées vers l'espace entre lesdites troisièmes branches et inversement pour les faces externes. En revanche, les faces externes de la tranche du couvercle du troisième profilé et la tranche des méplats des parties supérieures desdites deuxièmes branches correspondent aux parties desdits profilés exposés à l'extérieur du dispositif.

Dans cette configuration le film sort du dispositif au niveau de la jonction entre la tranche dudit couvercle et celle dudit méplat supérieur desdites deuxièmes branches, et la couche de protection recouvre les zones à proximité du film en sortie de sa zone d'amarrage sur ledit dispositif de fixation. Cette extension de la couche de protection à proximité de la zone de sortie du film sur les faces extérieures du dispositif, protège le film quelque soit sa géométrie, c'est-à-dire son inclinaison en sortie du dispositif, surtout en cas de battements sur ces zones des profilés.

On comprend que les formes des profilés mentionnés ci-dessus, notamment celles desdits éléments de blocage, s'étendent sur toute la longueur dudit profilé.

De préférence le dispositif selon l'invention est **caractérisé en ce que** ledit deuxième profilé et de préférence lesdits deuxième et troisième profilé, présentent une forme apte à être co-extrudée avec leur dite couche de protection.

Selon d'autres caractéristiques avantageuses de la présente invention :
- ledit troisième profilé est réalisé en matière plastique polyoléfinique de dureté supérieure ou égale à celle dudit deuxième profilé, de préférence en polypropylène de dureté Shore supérieure ou égale à 55 Shore D.

La souplesse du matériau de base du deuxième profilé (ou profilé oméga) contribue à faciliter la pose de celui-ci, en réduisant les risques de dégradation du film à la pose, puisqu'il peut se déformer lors de l'emboîtage. Les propriétés de dureté ou rigidité du troisième profilé (ou clé) sont suffisantes pour remplir la fonction de maintien du dispositif. Comme la clé n'est pas ou peu en contact avec le film, on peut pour ce troisième profilé utiliser une dureté maximale qui assure la propriété de maintien du film dans le clip.
- ledit deuxième profilé et de préférence ledit troisième profilé, présentent une souplesse suffisante pour en permettre le conditionnement sous forme continue enroulée, de préférence une dureté inférieure à 60 Shore D.

La présente invention a également pour objet une serre, de préférence de type « multi-chapelle», constituée de préférence d'une pluralité de nefs, dont la couverture comprend au moins une bâche ou film plastique fixé au niveau de la structure de la serre, de préférence le long de chenaux et/ou de cintres ou arceaux transversaux, la fixation de la couverture étant réalisée à l'aide d'un dispositif selon l'invention.

D'autres caractéristiques et avantages de la présente invention apparaîtront à la lumière de la description qui va suivre faite en référence aux figures dans lesquelles :
Les figures 1A et 1B représentent des nefs de serre destinées à recevoir un dispositif de fixation selon l'invention.
La figure 2 représente un dispositif de fixation selon l'invention préférée.
Les figures 3 et 3A à 3D représentent des variantes de réalisation d'un dispositif de fixation selon l'invention avec 3 profilés (figures 3A-3B) et avec seulement 2 profilés (figure 3C - 3D).
Les figures 1A et 1B représentent une nef 10 de serre telle que connue de l'état de la technique. Cette nef 10 est composée de fermes 11 implantées parallèlement dans le sol selon un pas régulier P. Les fermes 11 sont composées de poteaux droits 9, supportant au niveau de leur extrémités supérieures un cintre 8 en forme d'arceau (figure 1A) ou en forme d'arc brisé au faîte 8-1 des fermes 11 (figure 1B).

Les deux poteaux 9 verticaux sont reliés entre leurs extrémités supérieures par une traverse horizontale 13 et supportent au niveau de ces extrémités supérieures un cintre 8. Lesdites fermes 11 sont reliées les unes aux autres par des chéneaux 7 longitudinaux fixés entre lesdites extrémités supérieures des poteaux 9 des fermes.

Dans le sens longitudinal de la nef 10, les fermes 11 sont donc reliées entre elles par des chéneaux 7, servant à la récupération et l'évacuation des eaux de pluie. De plus, un ouvrant d'aération 12 est monté sur les cintres 8 des fermes 11 dans le sens longitudinal de la nef. Cet ouvrant 12, comme représenté sur les figures 1A et 1B, est un ouvrant sur chéneau. La nef 10 est destinée à être recouverte d'au moins une enveloppe de couverture 6 constituée de un ou deux films de matière plastique transparente, par exemple de polyéthylène. Cette enveloppe est tendue et fixée par des clips ou dispositifs de fixation selon l'invention 1 d'une part sur les cintres 8 et d'autre part le long 12₁ des ouvrants 12, et le long des chéneaux 7.

Enfin, les dispositifs de fixation selon l'invention peuvent être adaptés sur des cornières d'angle ou poteaux 9 pour recouvrir les rives de la serre.

Sur la figure 2, on a représenté un dispositif de fixation préféré selon l'invention avec trois profilés dont un dit premier profilé semelle en aluminium, et desdits deuxième profilé à profil en Omega et troisième profilé appelé clé de verrouillage en polypropylène. La formule du polymère ou copolymère de polypropylène du troisième profilé présente des caractéristiques de :
- dureté de 55 ShD,
- densité d'environ 1,05 kg/dm³,
- résistance à la rupture d'environ 25 MPa,
- allongement à la rupture étant d'environ 700 %, et
- module à 100 % d'allongement étant d'environ 15 MPa, et
- un point VICA de l'ordre de 117° C. Ce point VICA représente la température à partir de laquelle le matériau ramollit.

Pour le deuxième profilé, on peut utiliser une formulation de polypropylène identique à celle du troisième profilé. Toutefois, de préférence, on mettra en oeuvre un polypropylène de dureté inférieure à celle du troisième profilé.

La couche de protection est à base d'élastomère thermoplastique commercialisé par la société HUTCHINSON sous la dénomination Vegaprène^{®} présentant les caractéristiques approximatives suivantes :
- dureté ShA = 55 (méthode ISO 306)
- densité = 0,490 kg/dm³
- résistance à la rupture = 6,5 MPa,
- allongement à la rupture = 500 %,
- module à 100 % de l'allongement = 2 MPa

Le dispositif de fixation selon l'invention représenté sur la figure 2 présente les dimensions suivantes :
- L = 19 à 21 mm
- H1 = 1,6 mm
- H2 = 4 à 5 mm
- e1 = 0,3 mm
- e2 = 1,2 à 1,5 mm
- e3 = 2,5 à 3,5 mm
- e4 = 1 à 1,3 mm
- e5 = 1 à 1,4 mm

Sur la figure 2, on a représenté un dispositif de fixation 1 de bâche ou de film plastique 6 de couverture de serre 10 selon l'invention comprenant 3 profilés 2, 3, 4.

Un premier profilé 2 rigide constitue une semelle ou sabot, destiné à être fixé sur la structure de la serre, le long de chenaux 7 et de cintres ou arceaux transversaux 8 ou encore de poteaux 9. Ledit premier profilé 2 présente des premières parties latérales 2-2 dénommées premières branches, en élévation verticale par rapport à un fond plat 2-1 les reliant. Lesdites premières branches forment toutefois sur leurs faces internes des premiers éléments de blocage 2-3 par accrochage et/ou butée en forme de bosse.

Plus particulièrement, lesdites premières branches du premier profilé comprennent une partie centrale 2-4 sensiblement verticale, surmontée par une partie supérieure 2-3 formant une bosse ou surépaisseur sur sa face interne et dont la surface supérieure 2-3a est sensiblement plate et plus large que la partie centrale verticale 2-4.

Un deuxième profilé 3 présente une section transversale en forme dite d'oméga, avec des deuxièmes parties latérales 3-2 dénommées deuxièmes branches, en élévation verticale par rapport à un fond 3-1 les reliant, ledit fond 3-1 étant de préférence incurvé pour conférer de l'élasticité auxdites deuxièmes branches 3-2. Lesdites deuxièmes branches forment sur leurs faces externes des bosses ou crans correspondant à des deuxièmes éléments de blocage 2-3 par accrochage et/ou butée, complémentaires desdits premiers éléments de blocage, et aptes à être déformées pour venir coopérer en fixation par butée et retenue contre lesdits premiers éléments de blocage, sous l'action d'un moyen d'écartement 4 desdites deuxièmes branches après emboîtage dudit deuxième profilé dans ledit premier profilé entre lesdites premières branches, ceci de manière à fixer un dit film de couverture 6 par pincement, ledit film étant intercalé entre lesdits premier et deuxième profilés.

Ledit moyen d'écartement est un troisième profilé 4 en forme d'étrier renversé présentant une partie supérieure 4-1 plate et large recouvrant les faces supérieures formant méplats desdites deuxièmes branches et formant couvercle lorsque ledit troisième profilé est emboîté dans ledit deuxième profilé. En sous face dudit couvercle, s'étendent des troisièmes parties latérales inférieures 4-2 sensiblement verticales constituant des jambages et formant sur leurs faces externes des crans définissant des troisièmes éléments de blocage par accrochage et/ou butée 4-3.

Lesdites deuxièmes branches 3-2 dudit deuxième profilé forment sur leurs faces internes des quatrièmes éléments de blocage par accrochage et/ou en butée 3-4, complémentaires desdits troisièmes éléments de blocage 4-3. Les quatrièmes éléments de blocage sont aptes à coopérer en fixation par accrochage et/ou butée avec lesdits troisièmes éléments de blocage 4-3, lorsque ledit troisième profilé 4 est emboîté en force dans ledit deuxième profilé 3 avec lesdits jambages 4-3 entre lesdites deuxièmes branches. Ceci provoque le blocage desdits premier et deuxième éléments de blocage 2-3, 3-2 desdits premier et deuxième profilés 2,3.

La face supérieure du couvercle 4-1 dudit troisième profilé comprend des parties latérales sensiblement horizontales 4-4 dont la sous face vient en appui sur les faces supérieures formant méplats 3-5 desdites deuxièmes branches après emboîtement du dit troisième profilé contre et dans ledit deuxième profilé.

Lesdites deuxièmes branches du deuxième profilé comprennent une partie supérieure formant un large méplat 3-5 s'étendant vers l'extérieur du profilé par rapport à sa partie centrale sensiblement verticale 3-2a plus étroite. Cette partie centrale est plate verticale sur sa face externe, avec une bosse ou premier cran 3-3 à son extrémité inférieure formant un dit deuxième élément de blocage. La deuxième branche comporte sur sa face interne une partie supérieure inclinée par rapport à la verticale de sa partie inférieure, de sorte qu'à la jonction entre lesdites partie inférieure et supérieure, la face interne de la deuxième branche forme un quatrième cran 3-4 en extension vers l'intérieur de l'espace entre les deux deuxièmes branches , avec une face inférieure 3-4a plate horizontale et une face supérieure interne 3-4b inclinée selon la dite inclinaison, ledit quatrième cran 3-4 constituant un dit quatrième élément de blocage.

Les troisièmes branches 4-2 du troisième profilé comprennent à leur extrémités inférieures et sur leur faces externes, des troisièmes crans 4-3 en extension vers l'extérieur présentant une face supérieure 4-3a plate horizontale et une sous face externe 4-3b en inclinaison similaire à celle de la partie supérieure de la face interne de la deuxième branche, lesdits troisièmes crans formant des dits troisièmes éléments de blocage.

Lorsque ledit troisième profilé est emboîté dans le dit deuxième profilé, lui même étant emboîté dans le premier profilé, le blocage et la fixation du film s'effectue comme suit.

Les troisièmes crans 4-3 se calent en extension dessous lesdits deuxièmes crans 3-4, avec la face inférieure plate horizontale de l'un 3-4a retenant ou formant butée pour la face supérieure plate horizontale de l'autre 4-3a. L'extension vers l'extérieur des dits troisièmes crans 4-3 provoquent l'appui en force de la face externe de la partie centrale plate verticale 3-2a des deuxièmes branches contre la face interne plate verticale 2-3c de la partie supérieure 2-3 de plus grande largeur desdites premières branches 2-2 formant un dit premier élément de blocage. Et, ledit deuxième cran ou bosse 3-3 vient se caler en dessous de la dite partie supérieure 2-3 et contre la face interne de la partie inférieure 2-4 desdites premières branches. Dans cette position d'emboîtement, la sous face du méplat supérieur 3-5 desdites deuxièmes branches est en appui sur les surfaces supérieures horizontales desdites parties supérieures 2-3 formant une surépaisseur desdites premières branches.

La couche de protection couvre lesdits deuxième et troisième profilés, sur toutes les parties en contact avec le film à l'intérieur du dispositif 1 entre lesdits premier et deuxième profilés et les parties extérieures desdits deuxième et troisième profilé susceptibles de rentrer en contact avec le film en cas de battement de celui-ci, à savoir :
- les faces externes latérales correspondant à la tranche 4-4a dudit couvercle, et les bords supérieurs 4-4b dudit couvercle,
- les faces externes latérales de la partie supérieure 3-5 formant un méplat desdites deuxièmes branches incluant la tranche 3-5a desdits méplats, la sous face 3-5b desdits méplats,
- la face externe 3-2a de la partie centrale verticale et une bosse latérale inférieure 3-3 constituant un dit deuxième élément de blocage 3-3 desdites deuxièmes branches.

La sous face du fond 3-1 du deuxième profilé n'est pas couverte car elle n'est pas en appui sur le fond 2-1 du premier profilé, mais elle pourrait l'être dans le cas où l'on rechercherait une adhérence accrue.

Au niveau de la face externe de la partie centrale plate verticale 3-2a desdites deuxièmes branches 3-2, la couche de protection forme deux petites bosses longitudinales 5-1 entourant un creux et formant ainsi une petite surépaisseur 5-1 de couche correspondant à une augmentation de 50 à 100 % de l'épaisseur de la couche 5. De même, au niveau de la bosse ou dit deuxième cran 3-3 , la couche de protection 5 forme une dite grande surépaisseur 5-2, sensiblement de même épaisseur que ledit deuxième cran. Cette surépaisseur correspond à une augmentation d'épaisseur de la couche de 200 à 400 %. Cette grande surépaisseur permet de mettre en oeuvre un deuxième cran d'épaisseur relativement réduite et ainsi faciliter l'emboîtage dudit deuxième profilé dans le premier profilé, puisque la surépaisseur de la couche de protection peut s'écraser au passage de la dite bosse 3-3 dessous la partie supérieure 2-3. Mais, ceci se fait sans affecter l'efficacité du maintien du film puisque celui -ci est bloqué par expansion de la couche 5 et calage dudit deuxième cran 3-3 sous ledit premier élément de blocage 2-3.

Le mode de réalisation de la figure 2 est préféré car la forme desdits deuxième et troisième profilés est plus performante et en outre compatible avec une coextrusion desdits profilés et de leur couche de protection.

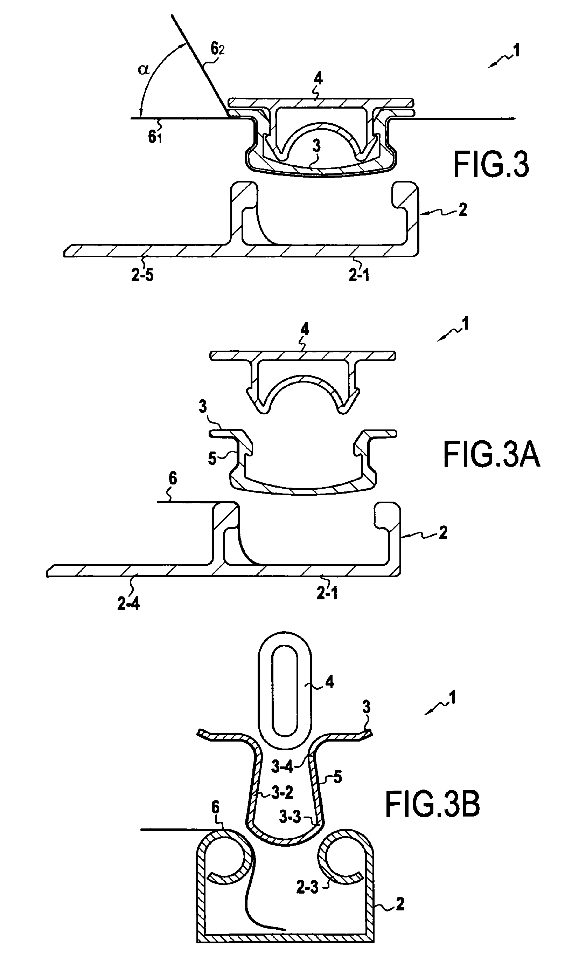

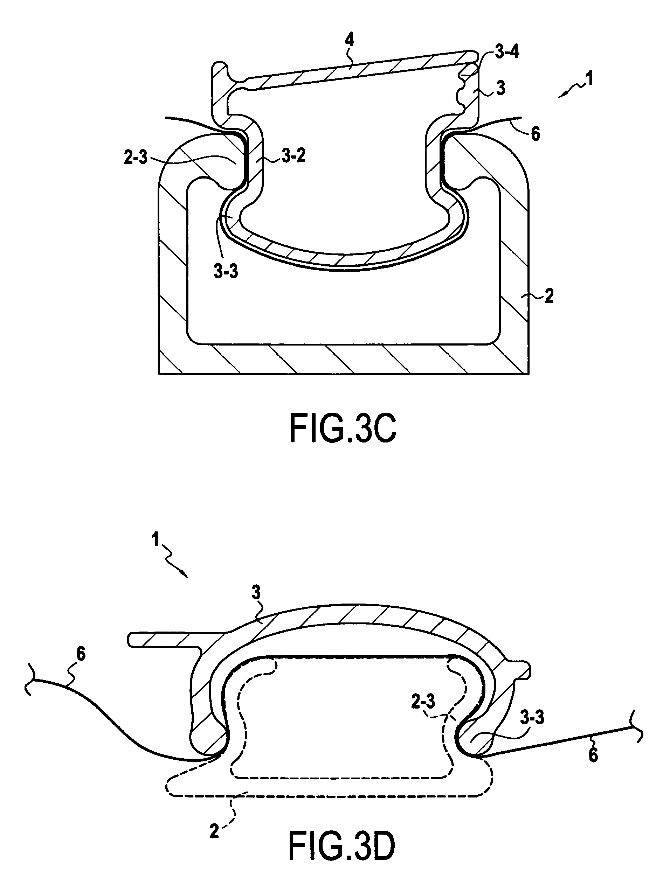

Toutefois, selon l'invention, on peut mettre en oeuvre des systèmes de fixation avec profilés conformes à la technique antérieure tels que représentés sur les figures 3A, 3B et 3C mais avec une couche de protection sur la face externe dudit deuxième profilé 3. Dans ce dispositif de la figure 3C, le troisième profilé est remplacé par un moyen d'écartement 4 visant à écarter lesdites deuxièmes branches 3-2 de façon à ce que la bosse inférieure 3-3 correspondant audit deuxième élément de blocage vienne buter contre la sous-face des premiers éléments de blocage 2-3 du premier profilé 2 et soit retenue par lesdits premiers éléments de blocage lorsque le moyen d'écartement 4 est mis en oeuvre.

Sur la figure 3, on a schématisé un dispositif de fixation d'une couverture constituée d'une double paroi avec deux films 6-1 et 6-2. Mais l'angle α entre les deux films 6-1 et 6-2 peut également correspondre à l'angle de battement d'un film qui peut atteindre 90° et donc frapper contre les tranches des parties supérieures desdits deuxième et troisième profilé.

Sur la figure 3, on a représenté ledit premier profilé avec une extension latérale 2-5 supportant les moyens de fixation dudit premier profilé sur la structure de la serre.

Sur la figure 3D, on a représenté un dispositif de fixation de la technique antérieure avec seulement deux profilés en aluminium dont ledit deuxième profilé vient recouvrir ledit premier profilé. En général dans ces systèmes à deux profilés, les deux profilés sont en aluminium. Toutefois, il est possible d'envisager pour ces profilés également une couche de protection des faces externes des deux ou au moins du deuxième profilé au niveau des zones d'appui des faces desdits profilés en contact avec le film à l'intérieur du dispositif et à l'extérieur du dispositif à proximité de la zone de sortie ou d'amarrage du film 6 sur les faces externes dudit profilé.

## Revendications

1. Dispositif de fixation (1) de matériaux souples tels que film plastique, bâche ou filet (6) de couverture de serre (10), comprenant au moins deux profilés (1, 2) dont :
- un premier profilé ouvert (2) rigide formant une rainure constituant une semelle ou sabot, fixé sur la structure de la serre, de préférence le long de chenaux (7) et/ou de cintres ou arceaux transversaux (8), et
- un deuxième profilé ouvert (3) de type oméga apte à se déformer et ou à être déformé pour s'emboîter dans ou par dessus ledit premier profilé (1) de manière à fixer un dit film de couverture (6) par pincement, ledit film étant intercalé entre lesdits de premier et deuxième profilés,
**Caractérisé en ce qu**'au moins les parties d'au moins l'un desdits premier et deuxième profilés, de préférence au moins les parties dudit deuxième profilé, venant en appui contre l'autre profilé pour réaliser ladite fixation dudit film coincé entre lesdites parties desdits premier et deuxième profilés, sont recouvertes d'une couche de protection (5) constituée d'un matériau présentant des propriétés de dureté réduite par rapport au matériau de base dudit profilé sur lequel elle est appliquée, de préférence ladite couche de protection étant réalisée en un matériau d'une dureté inférieure à 70 Shore A.

2. Dispositif selon la revendication 1 **caractérisé en ce que** les parties des faces supérieures et latérales externes dudit dispositif, de préférence les tranches latérales externes (3-5a) du deuxième profilé (3) au dessus dudit premier profilé (2), à proximité de la zone d'amarrage (6a) dudit film sur ledit dispositif, sont revêtues d'une dite couche de protection (5).

3. Dispositif selon la revendication 1 ou 2 **caractérisé en ce que** ladite couche de protection (5) est en matière antidérapante.

4. Dispositif selon l'une des revendications 1 ou 3 **caractérisé en ce que** lesdits premier et deuxième profilés sont en métal, de préférence en aluminium, ou en matière plastique, de préférence en matière thermoplastique polyoléfinique, et ladite couche de protection est en matière à caractère caoutchoutique.

5. Dispositif selon l'une des revendications 1 à 4 **caractérisé en ce que** ladite couche de protection (5) présente sur sa face de contact avec le dit film, au moins une zone comprenant des petites surépaisseurs formant bosses et creux (5-1) s'étendant longitudinalement, de préférence dans une zone plate (3-2a) de ladite partie du profilé sur laquelle ladite couche est appliquée et ladite surépaisseur représente de préférence encore une augmentation d'épaisseur de la couche de protection de 25 à 150 %.

6. Dispositif selon l'une des revendications 1 à 5 **caractérisé en ce que** ledit premier profilé comprend un premier élément de blocage (2-3) par accrochage et/ou butée et ledit deuxième profilé comprend un deuxième élément de blocage (3-3) par accrochage et/ou butée, complémentaire dudit premier élément de blocage, apte à se déformer et/ou à être déformé pour venir coopérer en fixation par appui contre ledit premier élément de blocage, et ladite couche de protection (5) présente une grande surépaisseur (5-2) au niveau de la zone de la (ou des) face(s) d'au moins l'un desdits premier et/ou second éléments de blocage, ladite grande surépaisseur (5-2) représentant une épaisseur pouvant représenter jusqu'à 150 % de l'épaisseur de la partie du profilé sur laquelle elle est appliquée.

7. Dispositif selon l'une des revendications 1 à 6 **caractérisé en ce que** ladite couche (5) de protection présente dans sa partie courante, une épaisseur d'environ 5 à 30%, de préférence au moins 15%, de l'épaisseur de la partie du profilé sur laquelle elle est appliquée.

8. Dispositif selon l'une des revendications 1 à 7 **caractérisé en ce que** ledit deuxième profilé est un profilé extrudé réalisé en polypropylène présentant un point VICA supérieur à 100°C, de préférence supérieur à 110°C, et ladite couche de protection est réalisée en matière élastomère thermoplastique (TPE) constitué**e** d'une résine thermoplastique et au moins un caoutchouc dispersé dans la phase thermoplastique, de préférence du type matière thermoplastique vulcanisée (TPV) dans laquelle le caoutchouc est un caoutchouc diénique vulcanisé.

9. Dispositif selon la revendication 8 **caractérisé en ce que** la dite matière thermoplastique vulcanisée dynamiquement est un mélange de Polypropylène et d'Ethylène-Propylène-Diène monomère (EPDM).

10. Dispositif selon la revendication 9 **caractérisé en ce que** ledit deuxième profilé (3) est réalisé en polypropylène de dureté Shore de 30 à 60 Shore D, et ladite couche de protection (5) est réalisée en élastomère thermoplastique présentant une dureté Shore de 50 à 70 Shore A, de préférence inférieure à 60 Shore A, de préférence de type Vegaprène^{®}.

11. Dispositif selon l'une des revendications 1 à 10 **caractérisé en ce que** :
- ledit premier profilé (2) présente des premières parties latérales (2-2) dénommées premières branches, en élévation verticale par rapport à un fond plat (2-1) les reliant, lesdites premières branches formant sur leurs faces internes des premiers éléments de blocage (2-3) par accrochage et/ou butée, et
- ledit deuxième profilé (3) présente une section transversale en oméga, avec des deuxièmes parties latérales (3-2) dénommées deuxièmes branches, en élévation verticale par rapport à un fond (3-1) les reliant, de préférence un fond incurvé, lesdites deuxièmes branches formant sur leurs faces externes des deuxièmes éléments de blocage (3-2) par accrochage et/ou butée, complémentaires desdits premiers éléments de blocage (2-3), aptes à se déformer et ou à être déformés pour venir coopérer en fixation par appui contre lesdits premiers éléments de blocage (2-3), sous l'action d'un moyen d'écartement (4) desdites deuxième branche après emboîtage dudit deuxième profilé dans ledit premier profilé entre lesdites premières branches (2-2), et
- lesdites deuxièmes branches (3-2) du deuxième profilé sont revêtues sur leurs faces externes latérales, au moins au niveau desdits deuxièmes élément de blocage (3-3), d'une dite couche de protection (5).

12. Dispositif selon la revendication 11 **caractérisé en ce que** ledit moyen d'écartement (4) est un troisième profilé dénommé profilé clé, venant s'emboîter en force entre lesdites deuxièmes branches (3-2) dudit deuxième profilé.

13. Dispositif selon la revendication 12 **caractérisé en ce que** :
- ledit troisième profilé (4) présente une partie supérieure (4-1) formant couvercle, en sous face de laquelle s'étendent des troisièmes parties latérales inférieures (4-2) sensiblement verticales constituant des jambages formant sur leurs faces externes des troisièmes éléments de blocage par accrochage et/ou butée (4-3), et
- lesdites deuxièmes branches (3-2) dudit deuxième profilé forment sur leurs faces internes des quatrièmes éléments de blocage par accrochage et/ou en butée (3-4) complémentaires desdits troisièmes éléments de blocage (4-3), aptes à coopérer en fixation par accrochage et/ou butée avec lesdits troisièmes éléments de blocage (4-3), lorsque ledit troisième profilé (4) est emboîté en force dans ledit deuxième profilé (3), provoquant ainsi le blocage desdits premiers et deuxièmes éléments de blocage (2-3, 3-2) desdits premier et deuxième profilés (2, 3), et
- la partie supérieure ou couvercle (4-1) dudit troisième profilé comprend des parties latérales sensiblement horizontales (4-4)) dont la sous face vient en appui sur les faces supérieures formant méplats (3-5) desdites deuxièmes branches après emboîtement dudit troisième profilé contre et dans ledit deuxième profilé, et
- au moins les faces externes latérales correspondant à la tranche (4-4a) dudit couvercle du troisième profilé, et de préférence les bords supérieurs (4-4b) dudit couvercle, ainsi que les faces externes latérales correspondant à la tranche (3-5a) desdits méplats desdites deuxièmes branches et de préférence les bords inférieurs (3-5b) en sous face desdits méplats desdites deuxièmes branches, sont recouverts d'une dite couche de protection (5).

14. Dispositif selon l'une des revendications 1 à 13 **caractérisé en ce que** ledit deuxième profilé et de préférence lesdits deuxième et troisième profilé, présentent une forme apte à être co-extrudée avec leur dite couche de protection.

15. Dispositif selon l'une des revendications 1 à 14 **caractérisé en ce que** ledit troisième profilé (4) est réalisé en matière plastique polyoléfinique de dureté supérieure ou égale à celle dudit deuxième profilé (3), de préférence en polypropylène de dureté Shore supérieure ou égale à 55 Shore D.

16. Dispositif selon l'une des revendications 1 à 15 **caractérisé en ce que** ledit deuxième profilé et de préférence ledit troisième profilé, présentent une souplesse suffisante pour en permettre le conditionnement sous forme continue enroulée, de préférence une dureté inférieure à 60 Shore D.

17. Serre (10), de préférence de type « multi-chapelle», constituée, de préférence, d' une pluralité de nefs (9), dont la couverture comprend au moins une bâche ou film plastique (5) fixé au niveau de la structure de la serre, de préférence le long de chéneaux (7) et/ou de cintres ou arceaux transversaux (8), la fixation de la couverture étant réalisée à l'aide d'un dispositif selon l'une des revendications 1 à 16.

## Claims

1. A fastener device (1) for fastening flexible materials such as a plastics film, tarpaulin, or net (6) for covering a greenhouse (10), the device comprising at least two section members (1, 2) namely:
• a first open section member (2) that is rigid, forming a groove constituting a soleplate or shoe that is fastened to the structure of the greenhouse, preferably along gutters (7) and/or transverse arches (8); and
• a second open section member (3) of omega type that is suitable for deforming and/or for being deformed so as to engage in or on said first section member (1) so as to fasten a said covering film (6) by pinching it, said film being interposed between said first and second section members;
the device being **characterized in that** at least those portions of at least one of said first and second section members, preferably at least those portions of said second section member, that come to bear against the other section member in order to achieve said fastening of said film wedged between said portions of said first and second section members are covered in a protective layer (5) made of a material presenting hardness properties that are smaller than those of the base material of said section member on which the layer is applied, said protective layer preferably being made of a material having hardness of less than 70 on the Shore A scale.

2. A device according to claim 1, **characterized in that** those portions of the top and outside faces of said device, preferably the outside edge faces (3-5a) of the second section member (3) above said first section member (2), that are close to the engagement zone (6a) where said film engages on said device, are coated in a said protective layer (5).

3. A device according to claim 1 or claim 2, **characterized in that** said protective layer (5) is made of a non-slip material.

4. A device according to claim 1 or claim 3, **characterized in that** said first and second section members are made of metal, preferably of aluminum, or of plastics material, preferably of polyolefin thermoplastic material, and said protective layer is made of material of a rubbery nature.

5. A device according to any one of claims 1 to 4, **characterized in that** said protective layer (5) presents on its face for contacting said film at least one zone that includes small extra thicknesses forming projections and depressions (5-1) that extend longitudinally, preferably in a flat zone (3-2a) of said portion of the section member on which said layer is applied, and said extra thicknesses also preferably represent an increase of thickness in the protective layer lying in the range 25% to 150%.

6. A device according to any one of claims 1 to 5, **characterized in that** said first section member includes a first blocking element (2-3) acting by catching and/or abutment, and said second section member includes a second blocking element (3-3) acting by catching and/or abutment, complementary to said first blocking element and suitable for deforming and/or being deformed to come into fastening co-operation by bearing against said first blocking element, and said protective layer (5) presents a large amount of extra thickness (5-2) in register with the zone of the face(s) of at least one of said first and/or second blocking elements, said large amount of extra thickness (5-2) representing a thickness that may constitute as much as 150% of the thickness of the portion of the section member on which it is applied.

7. A device according to any one of claims 1 to 6, **characterized in that** said protective layer (5) in its ordinary portion presents a thickness of about 5% to 30%, preferably at least 15% of the thickness of the section member on which it is applied.

8. A device according to any one of claims 1 to 7, **characterized in that** said second section member is an extruded section member made of polypropylene presenting a vicat softening point higher than 100°C, preferably higher than 110°C, and said protective layer is made of a thermoplastic elastomer (TPE) material constituted by at least one thermoplastic resin and at least one rubber dispersed in the thermoplastic phase, preferably of the vulcanized thermoplastic (VTP) material type in which the rubber is a vulcanized diene rubber.

9. A device according to claim 8, **characterized in that** said dynamically vulcanized thermoplastic material is a mixture of polyprolylene and of ethylene-propylene-diene monomer (EDPM).

10. A device according to claim 9, **characterized in that** said second section member (3) is made of polypropylene having hardness lying in the range 30 to 60 on the Shore D scale, and said protective layer (5) is made of a thermoplastic elastomer presenting hardness lying in the range 50 to 70 on the Shore A scale, preferably less than 60 on the Shore A scale, preferably of the Vegaprene® type.

11. A device according to any one of claims 1 to 10, **characterized in that**:
• said first section member (2) presents first side portions (2-2) referred to as first flanges extending vertically relative to a flat web (2-1) connecting them together, said first flanges forming on their inside faces first blocking elements (2-3) acting by catching and/or abutment; and
• said second section member (3) presents an omegashaped cross-section with second side portions (3-2) referred to as second flanges extending vertically relative to a web (3-1) connecting them together, preferably a curved web, said second flanges forming on their outside faces second blocking elements (3-2) acting by catching and/or abutment that are complementary to said first blocking elements (2-3) and that are suitable for deforming and/or for being deformed to come into fastening co-operation by bearing against said first blocking elements (2-3) under the action of spreader means (4) for spreading said second flanges apart after said second section member has been engaged in said first section member between said first flanges (2-2); and
• said second flanges (3-2) of the second section member are coated on their outside faces, at least in register with said second blocking elements (3-3), in a said protective layer (5).

12. A device according to claim 11, **characterized in that** said spreader means (4) comprise a third section member referred to as a key section member that is engaged by force between said second flanges (3-2) of said second section member.

13. A device according to claim 12, **characterized in that**:
• said third section member (4) presents a coverforming top portion (4-1) having bottom third side portions (4-2) that are substantially vertical extending from the underface thereof and constituting legs forming third blocking elements (4-3) on their outside faces that act by catching and/or abutment; and
• said second flanges (3-2) of said second section member form, on their inside faces, fourth blocking elements (3-4) that act by catching and/or abutment, that are complementary to said third blocking elements (4-3), and that are suitable for fastening co-operation by catching and/or abutment with said third blocking elements (4-3) when said third section member (4) is engaged by force in said second section member (3), thereby causing said first and second blocking elements (2-3, 3-2) of said first and second section members (2, 3) to be blocked; and
• the top portion or cover (4-1) of said third section member includes substantially horizontal side portions (4-4) with underfaces that come to bear on the top faces (3-5), forming flats, of said second flanges after said third section member has been engaged against and in said second section member; and
• at least the outside faces corresponding to the edge faces (4-4a) of said cover of the third section member, and preferably the top edges (4-4b) of said cover and the outside faces corresponding to the edge faces (3-5a) of said flats of said second flanges, and preferably the bottom edges (3-5b) under said flats of said second flanges, are all covered in a said protective layer (5).

14. A device according to any one of claims 1 to 13, **characterized in that** said second section member and preferably said second and third section members present(s) a shape suitable for being coextruded together with said protective layer(s).

15. A device according to any one of claims 1 to 14, **characterized in that** said third section member (4) is made of a polyolefin plastics material of hardness that is greater than or equal to the hardness of said second section member (3), preferably made of polypropylene having hardness greater than or equal to 55 on the Shore D scale.

16. A device according to any one of claims 1 to 15, **characterized in that** said second section member and preferably said third section member present(s) sufficient flexibility to enable it/them to be packaged in continuous rolled-up form, preferably having hardness less than 60 on the Shore D scale.

17. A green house (10), preferably of the multi-span type, preferably constituted by a plurality of naves (9), with the roof comprising at least one plastics film or tarpaulin (5) fastened to the structure of the greenhouse preferably along gutters (7) and/or transverse arches (8), the roof being fastened using a device according to any one of claims 1 to 16.

## Patentansprüche

1. Befestigungsvorrichtung (1) für flexibles Material, wie beispielsweise eine Plastikfolie, eine Plane oder ein Netz (6), zum Abdecken eines Gewächshauses (10), umfassend mindestens zwei Profile (1, 2), wobei:
- ein erstes offenes starres Profil (2) eine Nut bildet, die eine Fußplatte oder einen Schlitten bildet, der an der Struktur des Gewächshauses vorzugsweise entlang von Rinnen (7) und/oder Querbögen oder -rippen (8) befestigt ist,
- ein zweites offenes Profil (3) omegaförmig ist und sich verformen oder verformt werden kann, um sich in oder über das erste Profil (1) einzufügen, um eine Abdeckfolie (6) durch Einklemmen zu befestigen, wobei die Folie zwischen das erste und das zweite Profil geklemmt wird,
**dadurch gekennzeichnet, daß** mindestens die Teile mindestens eines der ersten und zweiten Profile, vorzugsweise mindestens die Teile des zweiten Profils, die an dem anderen Profil zur Anlage gelangen, um die Befestigung der zwischen den Teilen des ersten und zweiten Profils eingeklemmten Folie zu verwirklichen, mit einer Schutzschicht (5) überzogen sind, die aus einem Material besteht, das geringere Härteeigenschaften als das Basismaterial des Profils, auf das es aufgebracht wird, aufweist, wobei die Schutzschicht vorzugsweise aus einem Material mit einer Härte unter 70 Shore A hergestellt ist.

2. Vorrichtung nach Anspruch 1, **dadurch gekennzeichnet, daß** die Teile der oberen und seitlichen Außenseiten der Vorrichtung, vorzugsweise die äußeren seitlichen Abschnitte (3-5a) des zweiten Profils (3) über dem ersten Profil (2) in der Nähe der Befestigungszone (6a) der Folie auf der Vorrichtung mit einer genannten Schutzschicht (5) überzogen sind.

3. Vorrichtung nach Anspruch 1 oder 2, **dadurch gekennzeichnet, daß** die Schutzschicht (5) aus einem rutschfesten Material besteht.

4. Vorrichtung nach einem der Ansprüche 1 oder 3, **dadurch gekennzeichnet, daß** die ersten und zweiten Profile aus Metall, vorzugsweise aus Aluminium, oder aus Kunststoff, vorzugsweise aus einem thermoplastischen Polyolefinmaterial, und die Schutzschicht aus einem Material mit Kautschukcharakter besteht.

5. Vorrichtung nach einem der Ansprüche 1 bis 4, **dadurch gekennzeichnet, daß** die Schutzschicht (5) auf ihrer Kontaktfläche mit der Folie mindestens eine Zone aufweist, umfassend kleine Überdicken, die Wülste und Hohlräume (5-1) bilden, die sich längs vorzugsweise in der ebenen Zone (3-2a) des Teils des Profils erstrecken, auf den die Schicht aufgebracht wird, wobei die Überdicke vorzugsweise eine weitere Vergrößerung der Dicke der Schutzschicht von 25 bis 150 % aufweist.

6. Vorrichtung nach einem der Ansprüche 1 bis 5, **dadurch gekennzeichnet, daß** das erste Profil ein erstes Feststellelement (2-3) durch Fixieren und/oder Anschlagen umfaßt, und daß das zweite Profil ein zweites Feststellelement (3-3) durch Fixieren und/oder Anschlagen umfaßt, das zum ersten Feststellelement komplementär und geeignet ist, sich zu verformen und/oder verformt zu werden, um bei der Befestigung durch Abstützung am ersten Feststellelement zusammenzuwirken, und daß die Schutzschicht (5) eine große Überdicke (5-2) im Bereich der Zone der Seite(n) mindestens eines der ersten und/oder zweiten Feststellelemente aufweist, wobei die große Überdicke (5-2) eine Dicke aufweist, die bis zu 150 % der Dicke des Teils des Profils, auf den sie aufgebracht wird, ausmacht.

7. Vorrichtung nach einem der Ansprüche 1 bis 6, **dadurch gekennzeichnet, daß** die Schutzschicht (5) in ihrem laufenden Teil eine Dicke von ungefähr 5 bis 30 %, vorzugsweise mindestens 15 %, der Dicke des Teils des Profils, auf den sie aufgebracht wird, aufweist.

8. Vorrichtung nach einem der Ansprüche 1 bis 7, **dadurch gekennzeichnet, daß** das zweite Profil ein extrudiertes Profil aus Polypropylen ist, das einen VICA-Punkt über 100 °C, vorzugsweise über 110 °C, aufweist, wobei die Schutzschicht aus einem thermoplastischen Elastomermaterial (TPE) hergestellt ist, bestehend aus einem thermoplastischen Harz und mindestens einem in der thermoplastischen Phase dispergierten Kautschuk, vorzugsweise des Typs vulkanisiertes Thermoplast (TPV), bei dem der Kautschuk ein vulkanisierter dienhaltiger Kautschuk ist.

9. Vorrichtung nach Anspruch 8, **dadurch gekennzeichnet, daß** das dynamisch vulkanisierte Thermoplast ein Gemisch aus Polypropylen und einem Ethylenpropylendien-Monomer (EPDM) ist.

10. Vorrichtung nach Anspruch 9, **dadurch gekennzeichnet daß** das zweite Profil (3) aus Polypropylen mit eine Shore-Härte von 30 bis 60 Shore D hergestellt ist, und daß die Schutzschicht (5) aus thermoplastischem Elastomer hergestellt ist, das eine Shore-Härte von 50 bis 70 Shore A, vorzugsweise unter 60 Shore A, aufweist, und vorzugsweise vom Typ Vegaprene® ist.

11. Vorrichtung nach einem der Ansprüche 1 bis 10, **dadurch gekennzeichnet, daß**:
- das erste Profil (2) erste Seitenteile (2-2), erste Schenkel genannt, vertikal aufsteigend in Bezug zu einem ebenen Boden (2-1), der sie verbindet, umfaßt, wobei die ersten Schenkel auf ihren Innenseiten erste Feststellelemente (2-3) durch Fixieren und/oder Anschlagen bilden, und
- das zweite Profil (3) einen omegaförmigen Querabschnitt mit zweiten Seitenteilen (3-2), zweite Schenkel genannt, vertikal aufsteigend in Bezug zu einem Boden (3-1), der sie verbindet, vorzugsweise einem gebogenen Boden, umfaßt, wobei die zweiten Schenkel auf ihren Außenseiten zweite Feststellelemente (3-2) durch Fixieren und/oder Anschlagen bilden, die zu den ersten Feststellelementen (2-3) komplementär und geeignet sind, sich zu verformen oder verformt zu werden, um bei der Befestigung durch Abstützung an den ersten Feststellelementen (2-3) zusammenzuwirken, unter der Wirkung eines Abstandmittels (4) der zweiten Schenkel nach dem Einsetzen des zweiten Profils in das erste Profil zwischen den ersten Schenkeln (2-2), und
- die zweiten Schenkel (3-2) des zweiten Profils auf ihren äußeren Seitenflächen mindestens im Bereich der zweiten Feststellelemente (3-3) mit einer genannten Schutzschicht (5) überzogen sind.

12. Vorrichtung nach Anspruch 11, **dadurch gekennzeichnet, daß** das Abstandsmittel (4) ein drittes Profil, Schlüsselprofil genannt, ist, das fest zwischen die beiden Schenkel (3-2) des zweiten Profils eingesteckt wird.

13. Vorrichtung nach Anspruch 12, **dadurch gekennzeichnet, daß**:
- das dritte Profil (4) einen oberen Teil (4-1), der einen Deckel bildet, aufweist, auf dessen Unterseite sich dritte untere im wesentlichen vertikale Seitenteile (4-2) erstrecken, die Pfosten darstellen, die auf ihren Außenflächen dritte Feststellelemente durch Fixieren und/oder Anschlagen (4-3) bilden, und
- die zweiten Schenkel (3-2) des zweiten Profils auf ihren Innenseiten vierte Feststellelemente durch Fixieren und/oder Anschlagen (3-4) bilden, die zu den dritten Feststellelementen (4-3) komplementär und geeignet sind, bei der Befestigung durch Fixieren und/oder Anschlagen mit den dritten Feststellelementen (4-3) zusammenzuwirken, wenn das dritte Profil (4) fest in das zweite Profil (3) eingesteckt wird, wodurch die Feststellung der ersten und zweiten Feststellelemente (2-3, 3-2) der ersten und zweiten Profile (2, 3) hervorgerufen wird, und
- der oberen Teil oder Deckel (4-1) des dritten Profils im wesentlichen horizontale Seitenteile (4-4) umfaßt, deren Unterseite an den oberen Seiten zur Anlage gelangen, die Abflachungen (3-5) der zweiten Schenkel nach dem Einstecken des dritten Profils gegen und in das zweite Profil bilden, und
- mindestens die seitlichen Außenflächen, die dem Abschnitt (4-4a) des Deckels des dritten Profils entsprechen, und vorzugsweise die oberen Ränder (4-4b) des Deckels des dritten Profils sowie die seitlichen Außenflächen, die dem Abschnitt (3-5a) der Abflachungen der zweiten Schenkel entsprechen, und vorzugsweise die unteren Ränder (3-5b) auf der Unterseite der Abflachungen der zweiten Schenkel mit einer Schutzschicht (5) überzogen sind.

14. Vorrichtung nach einem der Ansprüche 1 bis 13, **dadurch gekennzeichnet, daß** das zweite Profil und vorzugsweise das zweite und das dritte Profil eine Form aufweisen, die mit der genannten Schutzschicht co-extrudiert werden kann.

15. Vorrichtung nach einem der Ansprüche 1 bis 14, **dadurch gekennzeichnet, daß** das dritte Profil (4) aus einem Polyolefinkunststoff mit einer Härte größer oder gleich jener des zweiten Profils (3) hergestellt ist, vorzugsweise aus Polypropylen mit einer Shore-Härte größer oder gleich 55 Shore D.

16. Vorrichtung nach einem der Ansprüche 1 bis 15, **dadurch gekennzeichnet, daß** das zweite Profil und vorzugsweise das dritte Profil eine ausreichende Biegsamkeit aufweisen, um deren Verpackung in durchgehend aufgewickelter Form zu ermöglichen, vorzugsweise eine Härte unter 60 Shore D.

17. Gewächshaus (10), vorzugsweise vom Typ mit mehreren Gehäusen, das vorzugsweise von einer Vielzahl von Langschiffen (9) gebildet ist, deren Abdeckung mindestens eine Plane oder Kunststofffolie (5) umfaßt, die im Bereich der Struktur des Gewächshauses vorzugsweise entlang von Rinnen (7) und/oder Querbögen oder -rippen (8) befestigt ist, wobei die Befestigung der Abdeckung mit Hilfe einer Vorrichtung nach einem der Ansprüche 1 bis 16 erfolgt.
